# FASCICULE DE BREVET EUROPEEN

(11) **EP 1 309 131 B1**
(45) Date de publication et mention de la délivrance du brevet: **16.06.2010**
(21) Numéro de dépôt: 02292705.7
(22) Date de dépôt: 30.10.2002
(51) Int. Cl.: H04L 12/44, H04L 12/413, H04L 29/14

(54) **Procédé de mise en oeuvre d'un réseau de communication redondant de type Ethernet full-duplex commuté**
Verfahren zur Realisierung eines full-duplex switched Ethernet redundanten Kommunikationsnetz
Method for implementation of a full-duplex switched Ethernet redundant communication network

(30) Priorité: 05.11.2001 FR 0114264
(43) Date de publication de la demande: 07.05.2003
(73) Titulaire: AIRBUS OPERATIONS, 31060 Toulouse (FR)
(72) Inventeur: Saint Etienne, Jean-Francois, 31270 Cugnaux (FR); Lopez, Juan, 31300 Toulouse (FR); Portes, Dominique, 31320 Auzeville Tolosane (FR); Gambardella, Eddie, 31700 Blagnac (FR); Pasquier, Bruno, 31530 Thil (FR); Almeida, Philippe, 31270 Cugnaux (FR)
(74) Mandataire: Poulin, Gérard

(56) Documents cités:
- EP-A- 0 854 610
- US-A- 6 133 846
- RINDOS A ET AL: "A performance evaluation of emerging Ethernet technologies: switched/high-speed/full-duplex Ethernet and Ethernet LAN emulation over ATM" SOUTHEASTCON '96. BRINGING TOGETHER EDUCATION, SCIENCE AND TECHNOLOGY., PROCEEDINGS OF THE IEEE TAMPA, FL, USA 11-14 APRIL 1996, NEW YORK, NY, USA,IEEE, US, 11 avril 1996 (1996-04-11), pages 401-404, XP010163567 ISBN: 0-7803-3088-9

## Description

### Domaine technique

La présente invention concerne un procédé de mise en oeuvre d'un réseau de communication redondant de type Ethernet full-duplex commuté, notamment dans le domaine avionique.

### Etat de la technique antérieure

Le réseau Ethernet, qui est la référence dans le monde des réseaux de communication, permet d'envoyer des données sous forme numérique par paquets, ou "trames", une trame étant définie comme un ensemble de données envoyé en une seule fois sur le réseau.

Dans un réseau Ethernet, les données de chaque trame ne sont pas interprétées. Le réseau les transporte sans connaître leur signification. Une trame est constitué de deux types de données, des données réseaux qui sont utilisés pour acheminer la trame à bon port et des données utiles qui sont la "charge utile" de la trame.

Un réseau Ethernet est constitué d'équipements, qui sont abonnés au réseau, connectés entre eux par l'intermédiaire d'un moyen de communication formé d'équipements actifs appelés commutateurs, qui ont trois rôles :
- connecter les abonnés du réseau en mode point à point via des liens physiques, qui sont les supports physiques des messages à échanger, par exemple des câbles en paire torsadée,
- acheminer (commuter) les trames émises par des équipements sources vers un ou des équipements destinataires,
- vérifier l'intégrité de la trame Ethernet et son format.

L'article intitulé « A performance évaluation of emerging Ethernet technologies : switched/high speed/full-duplex Ethernet and ethernet LAN emulation over ATM » de Andrew Rindos, Steven Woolet et Larry Nicholson (Southeastcom'96, Proceedings of the IEEE Tampa, 11-14 avril 1996, New-York, pages 401-404, 0-7803-3088-9) évalue les performances de nouvelles technologies telles que Ethernet 10 et 100 Mps, commuté ou non commuté, half-duplex ou full-duplex, emulation LAN Ethernet sur ATM en utilisant des mesures de l'Ethernet réel, et des produits ATM. Cet article envisage l'ajout de commutateurs qui permet de réduire la congestion et les collisions dans un réseau Ethernet.

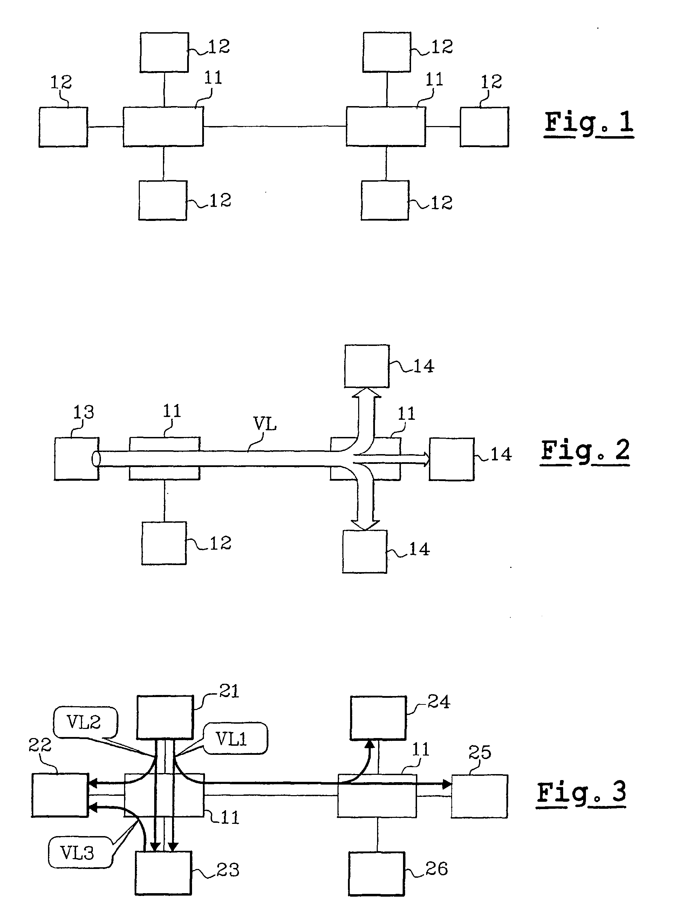

La figure 1 illustre un réseau Ethernet constitué de deux commutateurs 11 interconnectés entre eux et reliés chacun à trois équipements abonnés 12 en mode point à point.

Le fonctionnement d'un tel réseau est simple. Chaque abonné du réseau peut émettre des trames à tout moment sous forme numérique vers un, ou plusieurs autres abonnés. Lorsque les trames sont reçus par un commutateur, les données "information réseau" sont analysées pour connaître le ou les équipements destinataires. Les trames sont alors commutées vers ces équipements.

Dans la désignation "réseau de type Ethernet full duplex commuté" :
- le terme "full duplex" signifie que l'abonné peut émettre et recevoir des trames en même temps sur la même liaison,
- le terme "commuté" signifie que les trames sont commutées dans les commutateurs sur les sorties appropriées.

Un tel réseau peut être, par exemple, un réseau de type 100 Mbit/s full duplex commuté sur paire torsadée ; le terme "paire torsadée" indiquant que les liaisons entre les équipements et les commutateurs sont constituées de deux paires de câbles, chaque paire étant torsadée ; le terme 100 Mbit/s indiquant simplement la vitesse d'émission ou de réception des trames sur le réseau.

La technologie Ethernet impose :
- une taille minimum et une taille maximum sur les trames,
- une identification de la source et du ou des destinataires dans chaque trame,
- un CRC (ou "cyclic redundancy check") qui permet de vérifier l'intégrité des données transportées.

Actuellement, dans le domaine de l'aéronautique civile, les échanges de données entre les différents calculateurs embarqués sont basés sur l'utilisation du standard aéronautique ARINC 429.

Le réseau Ethernet full-duplex commuté est, par contre, utilisé couramment dans le domaine industriel. L'émergence de nouvelles technologies de communication fait apparaître un tel réseau comme une solution ouverte et normalisée (IEEE Standard 802.3) avec un fort potentiel de développement en tant que réseau local. Mais, une telle solution ne dispose pas des moyens pour garantir la ségrégation et les performances de transfert (en terme de débit, latence, ...) nécessaires aux applications avioniques.

La présente invention a pour objectif d'augmenter la disponibilité d'un tel réseau en se prémunissant de la perte d'un lien ou d'un commutateur, de manière à permettre une utilisation dans le domaine avionique

En général, dans un système de contrôle distribué, pour contrôler chaque noeud d'un ensemble de noeuds (équipement) à partir de l'un de ces noeuds, on réalise une redondance du système de communication permettant de connecter ces noeuds de manière à augmenter le taux de fonctionnement du système, et donc son efficacité.

Une demande de brevet européen EP-0 854 610 décrit un procédé de redondance de communication Ethernet entre un ensemble de noeuds constituant un tel système de contrôle distribué. Ces noeuds sont connectés les uns aux autres en duplex à travers les lignes de communication d'un premier et d'un second réseaux Ethernet, qui sont indépendants entre eux. Du côté émission, un premier noeud transmet des données identiques sur les lignes de communication du premier et du second réseaux, un identificateur de données étant ajouté aux données transmises. Un second noeud, du côté réception, détermine celle des données identiques reçues en provenance du premier noeud à travers les lignes de communication du premier et du second réseaux, qui est arrivée la première comme étant la donnée de réception. La seconde donnée, si elle est identique à la première, est alors rejetée.

Contrairement au procédé décrit dans cette demande de brevet qui agit au niveau des données, l'objectif de l'invention est de réaliser un procédé permettant une redondance trame par trame.

### Exposé de l'invention

L'invention concerne un procédé de mise en oeuvre d'un réseau de communication redondant de type Ethernet full-duplex commuté tel que défini dans la revendication 1.

Des modes avantageux de réalisation de l'invention sont définis dans les revendications dépendants.

Le procédé de l'invention peut, avantageusement, être utilisé pour la mise en oeuvre d'un réseau de communication redondant de type Ethernet full-duplex commuté dans le domaine avionique.

Une telle redondance réseau qui consiste, par exemple, à doubler le réseau, chaque abonné ayant une connexion à chacun des deux réseaux, un des deux paquets étant sélectionné à la réception, permet d'augmenter la disponibilité du réseau ; celui-ci fonctionnant même avec un ou plusieurs commutateurs ou liens défaillants.

L'invention permet d'obtenir des redondances d'ordre 2 et plus indépendamment de la pile de communication et des applications.

### Brève description des figures

- La figure 1 illustre un réseau Ethernet de l'art connu,
- la figure 2 illustre le concept de lien virtuel dans un réseau Ethernet de l'art connu,
- la figure 3 illustre un réseau Ethernet de l'art connu dans lequel sont mis en évidence plusieurs liens virtuels,
- la figure 4 illustre les services mis en oeuvre dans le procédé de l'invention,
- la figure 5 illustre un exemple de redondance 2 dans un équipement abonné selon l'invention,
- les figures 6A et 6B illustrent le fonctionnement du procédé de l'invention respectivement en mode émission et en mode réception.

### Exposé détaillé de modes de réalisation

L'invention concerne un procédé de mise en oeuvre d'un réseau de communication redondant de type Ethernet full-duplex commuté comportant au moins deux réseaux élémentaires qui comprennent chacun au moins un équipement abonné source et au moins un équipement abonné destinataire reliés entre eux par au moins un lien physique. Dans la suite de la description on considérera, à titre d'exemple non limitatif, deux réseaux élémentaires RE1 et RE2. Ce procédé réalise une redondance trame par trame sur chacun des réseaux élémentaires.

A l'émission, il comporte les étapes suivantes :
- rajout sur chaque trame émise d'un champ de numérotation permettant d'insérer un numéro de trame et donc d'identifier temporellement chaque trame,
- envoi de cette trame sur chacun des réseaux élémentaires.

A la réception, il comporte les étapes suivantes :
- mémorisation du numéro de la trame reçue,
- prise en compte de cette trame uniquement si son numéro n'a pas été reçu préalablement.

Avantageusement, l'étape de prise en compte d'une trame n'a lieu que pendant une fenêtre de temps donné, ce qui permet de n'utiliser qu'une mémoire limitée, chaque numéro de trame réapparaissant au bout d'un temps déterminé.

Le procédé de l'invention permet donc de n'envoyer à l'application considérée que la première trame reçue en provenance d'un réseau élémentaire, les autres trames correspondantes en provenance des autres réseaux élémentaires étant rejetées.

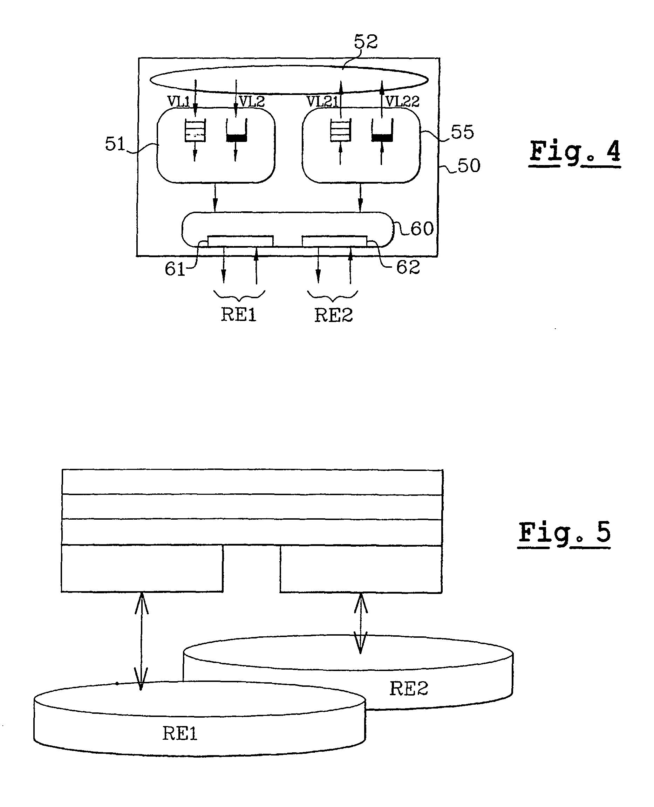

La figure 5 illustre un exemple de redondance d'ordre 2 mise en oeuvre dans un équipement abonné.

Dans un mode de réalisation avantageux, le procédé de l'invention utilise le concept de lien virtuel pour borner le temps de transfert de bout en bout, c'est-à-dire d'un équipement source vers un ou plusieurs équipements destinataires.

Ce concept de lien virtuel (VL) permet d'isoler les transferts de données entre un équipement source 13 et des équipements destinataires 14. Un lien virtuel VL est vu comme un "tuyau" sur le réseau, comme illustré sur la figure 2.

Un lien virtuel VL est caractérisé par :
- un sens de transfert, le lien virtuel étant mono-directionnel,
- un équipement source unique 13,
- un ou plusieurs équipements destinataires 14,
- une bande passante (nombre maximum de paquets et leur taille par seconde) figée,
- un temps maximum garanti de transfert des paquets d'un équipement source 13 vers un équipement destinataire 14, quel que soit le comportement du reste du réseau, chaque lien virtuel ayant son propre temps de transfert,
- un chemin figé sur le réseau,
- un identifiant unique.

Un abonné du réseau peut comporter plusieurs liens virtuels VL1, VL2, VL3, comme illustré sur la figure 3. On a en effet :
- un lien virtuel VL1 allant de l'équipement 21 vers les équipements 23, 24 et 25,
- un lien virtuel VL2 allant de l'équipement 21 vers les équipements 22 et 23,
- un lien virtuel VL3 allant de l'équipement 23 vers l'équipement 22.

Lorsque l'équipement 21 veut envoyer un paquet vers les équipements 23, 24 et 25, il émet un paquet sur le lien virtuel VL1. Lorsqu'il veut émettre un paquet vers les équipements 22 et 23, il émet un paquet sur le lien virtuel VL2.

La différence entre les liens virtuels VL1 et VL2 se fait par l'identifiant de destination dans le paquet. Sur le réseau, l'appartenance d'un paquet à un lien virtuel se fait par l'identificateur du lien virtuel dans le paquet.

Un commutateur connaît, par une table de configuration statique, les liens virtuels qu'il doit commuter ainsi que le nombre de paquets autorisés pour un lien virtuel.

Le concept de lien virtuel permet de figer les communications entre les équipements en configurant les routes et les bandes passantes allouées aux liens virtuels. Ainsi, le flux formé par un lien virtuel est assuré de ne pas être perturbé par les autres flux partageant les mêmes liens physiques tout au long de sa route dans le réseau.

De plus, le concept de lien virtuel permet, par une gestion centralisée des flux, de s'assurer que la somme des bandes passantes allouées aux liens virtuels sur un même lien physique ne dépasse pas les capacités de la technologie de celui-ci. Dans l'exemple ci-dessus, la somme des bandes passantes des liens virtuels VL1 et VL2 doit être inférieure à la capacité du lien physique en émission de l'équipement 21.

Un lien virtuel est donc la représentation conceptuelle d'une liaison d'un équipement émetteur vers un ou plusieurs équipements récepteurs qui possède les caractéristiques suivantes :
- route fixe et prédéfinie sur le réseau,
- bande passante fixe et garantie,
- latence de bout en bout maximale garantie,
- identification explicite dans une trame Ethernet de type multidestinataire ou "multicast" (adresse MAC de destination multidestinataire) et conservation de cette identification lors de la traversée d'un ou des commutateurs.

Comme illustré sur la figure 4, le procédé de l'invention est alors caractérisé par la mise en oeuvre de plusieurs services dans chacun des équipements abonnés 50 :
- Un service d'émission, dont le rôle est de permettre à une application 52 d'accéder aux liens virtuels en émission (liens virtuels VL1 et VL2). Ce service permet de multiplexer les liens virtuels vers un lien physique au travers d'un interface Ethernet et pour chaque lien virtuel d'émettre les paquets en fonction de la bande passante allouée à celui-ci.
- Un service de réception 55 qui permet de décoder les trames (liens virtuels VL21 et VL22) de vérifier leur bon format et de mettre les données utiles à la disposition des applications.

Dans ces services d'émission et de réception, un lien virtuel peut être représenté, vu l'application, comme une file d'attente.

D'autres services de protection permettent de se prémunir de certaines défaillances du réseau :
- Un service de protection de bande passante dans le commutateur, qui permet, pour chaque lien virtuel entrant, de vérifier les caractéristiques temporelles des paquets (l'espacement entre paquets, la bande passante consommée). En cas de dépassement des caractéristiques permises, les paquets sont simplement détruits, pour éviter qu'une défaillance au niveau d'un émetteur ou d'un lien virtuel ne vienne compromettre le trafic dans les autres liens virtuels partant de ce commutateur.
- Un service 60 de redondance réseau au niveau abonné, qui permet d'envoyer et de recevoir chaque trame sur les deux réseaux élémentaires RE1 et RE2, afin de mettre en oeuvre une redondance réseau. Cette duplication du réseau en deux réseaux élémentaires RE1 et RE2, qui est transparente pour les applications, permet de se prémunir d'une panne d'un commutateur ou d'une interface (elle ne remplace pas la redondance de niveau système). Ce service de redondance réseau 60 est relié à au moins un premier interface Ethernet 61 avec le réseau élémentaire RE1, et un second interface Ethernet 62 avec le réseau élémentaire RE2.

Comme illustré sur la figure 5, dans le procédé de l'invention pour obtenir une redondance des liens virtuels sur la couche physique, les équipements comprennent au moins deux interfaces physiques, qui leur permettent de se connecter sur au moins deux réseaux élémentaires indépendants RE1 et RE2. Leurs piles de communication incluent les mécanismes de redondances qui autorisent :
- d'émettre sur les réseaux élémentaires RE1 et RE2 une trame identique,
- de sélectionner la première trame reçue valide.

Dans ce mode de réalisation, les étapes du procédé de l'invention mises en oeuvre dans les équipements abonnés et appliquées par lien virtuel sur le réseau sont donc telles que :
- en émission, à chaque trame reçue de la pile de communication :
   - on ajoute un champ de numérotation, tel que, pour chaque lien virtuel, un compteur numérote la trame correspondante,
   - on envoie cette trame sur les réseaux élémentaires RE1 et RE2.
- en réception, pour chaque trame reçue affectée à un lien virtuel :

- on mémorise le numéro de la trame,
- on prend en compte cette trame si ce numéro n'a pas été préalablement reçu, dans le cas contraire on la détruit.

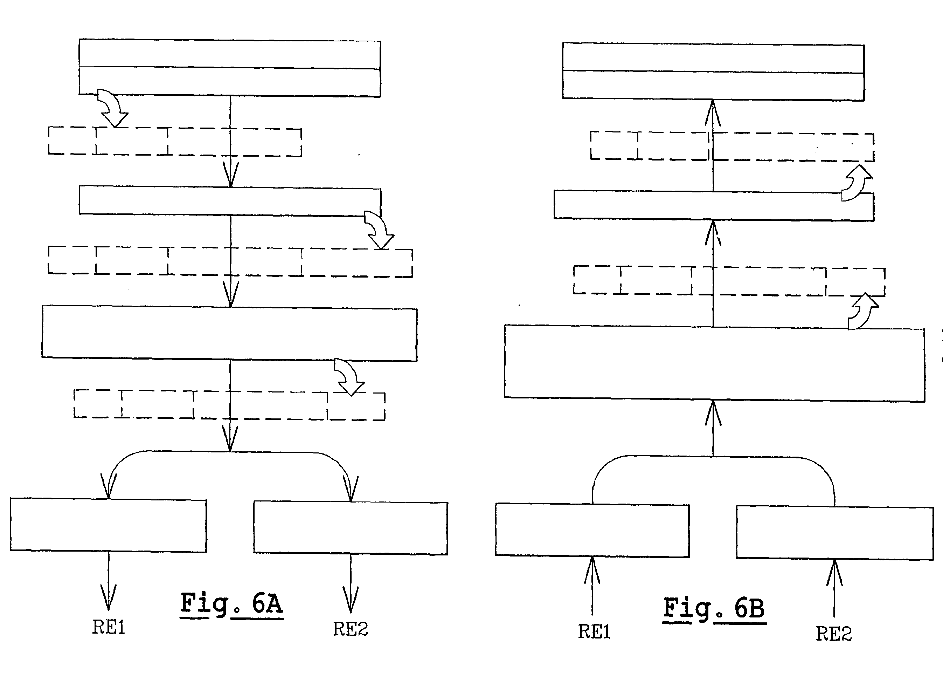

Les figures 6A, en émission, et 6B, en réception, illustrent ce mode de réalisation du procédé de l'invention.

Sur la figure 6A, on a successivement :
- ajout d'un champ de numérotation sur l'ensemble IP/UDP/données,
- numérotation de la trame pour chaque lien virtuel,
- envoi de la trame à chaque contrôleur Ethernet qui la formate en une trame IEEE 802.3.

La numérotation est faite par lien virtuel, un même numéro peut être utilisé pour deux liens virtuels différents.

Sur la figure 6B on a successivement :
- vérification, pour chaque lien virtuel, du numéro dans le champ numérotation,
- élimination de la trame si le numéro a déjà été reçu,
- sinon transmission de la trame à la couche supérieure.

Le champ compteur peut être de faible taille, lorsque le compteur atteint sa valeur maximum, la numérotation de la trame repart de zéro.

## Revendications

1. Procédé de mise en oeuvre d'un réseau de communication redondant de type Ethernet full-duplex commuté, un équipement abonné source (13) étant relié à au moins un équipement abonné destinataire (14) au moyen d'un lien virtuel, l'équipement abonné source et l'équipement abonné destinataire étant reliés entre eux par au moins un lien physique au travers d'au moins en commutateur, ledit lien virtuel étant **caractérisé par** une route fixe et prédéfinie sur le réseau une bande passante fixe et garantie, une latence de bout en bout maximale garantie, un flux formé par un lien virtuel n'étant pas perturbé par les autres flux partageant les mêmes liens physiques tout au long de sa route dans le réseau, ledit réseau comprenant au moins deux réseaux élémentaires indépendants (RE1, RE2), ledit équipement abonné source et ledit équipement abonné destinataire étant connectés à chaque réseau élémentaire, et tel que, pour chaque trame à transmettre par l'équipement abonné source à l'équipement abonné destinataire,
- on ajoute à chaque trame un champ de numérotation contenant un numéro de trame,
- on envoie cette trame sur chacun des dits réseaux élémentaires (RE1, RE2).

2. Procédé selon la revendication 1, **caractérisée en ce qu'**à la réception par ledit équipement abonné destinataire:
- on mémorise le numéro de la trame reçue,
- on prend en compte cette trame si et seulement si son numéro n'a pas été reçu préalablement.

3. Procédé selon la revendication 2, dans lequel l'étape de prise en compte d'une trame a lieu pendant une fenêtre de temps déterminée.

4. Procédé selon la revendication 2, dans lequel un numéro de lien virtuel est pris en compte dans le champ de numérotation.

5. Procédé selon l'une quelconque des revendications précédentes pour la mise en oeuvre d'un réseau de communication redondant de type Ethernet full-duplex commuté dans le domaine avionique.

## Claims

1. Process for implementation of a redundant switched full-duplex Ethernet type communication network, a source subscriber equipment (13) being connected to at least one destination subscriber equipment (14) through at least one virtual link, said source subscriber equipment and said destination equipment being connected via at least one physical link through at least one switch, said virtual link being **characterized by** a fixed and predetermined route through the network, a fixed and garanteed bandwidth, a garanteed maximal end-to-end lateny, a flow represented by a virtual link being undisturbed by the other flows sharing the same physical links along the route through the network, the network comprising at least two independent elementary networks (RE1, RE2), said source subscriber equipment and said destination subscriber equipment being connected to each independent elementary network, and such that for each frame to be transmitted from the source subscriber equipment to the destination subscriber equipment:
- a numbering field containing a frame number is added to each frame,
- this frame is sent on each of said elementary networks (RE1, RE2).

2. Process according to claim 1, that comprises the following steps in reception:
- storage of the received frame number,
- acceptance of this frame only if its number has not already been received.

3. Process according to claim 2, in which the step to accept a frame takes place within a given time window.

4. Process according to claim 2, in which a virtual link number is taken into account in the numbering field.

5. Process according to any one of the previous claims that is used for implementation of a redundant switched full-duplex Ethernet type communication network in avionics.

## Patentansprüche

1. Verfahren zur Implementierung eines redundanten Kommunikationsnetzes vom Typ geschaltetes Full-Duplex-Ethernet, wobei ein Quellenteilnehmergerät (13) mittels einer virtuellen Verbindung mit wenigstens einem Zielteilnehmergerät (14) verbunden ist, wobei das Quellenteilnehmergerät und das Zielteilnehmergerät miteinander mittels wenigstens einer physischen Verbindung über wenigstens einen Schalter verbunden sind, wobei die virtuelle Verbindung **gekennzeichnet ist durch** eine feste und vordefinierte Route auf dem Netz, eine feste und garantierte Bandbreite, eine maximale garantierte End-zu-End-Latenz, wobei ein **durch** eine virtuelle Verbindung gebildeter Fluss während seiner gesamten Route in dem Netz nicht **durch** die anderen Flüsse gestört wird, die die gleichen physischen Verbindungen teilen, wobei das Netz wenigstens zwei unabhängige Elementarnetze (RE1, RE2) umfasst, wobei das Quellenteilnehmergerät und das Zielteilnehmergerät mit jedem Elementarnetz verbunden sind, und derart, dass man für jedes Raster, das vom Quellenteilnehmergerät zum Zielteilnehmergerät übertragen werden soll
- zu jedem Raster ein Nummerierungsfeld hinzufügt, das eine Rasternummer enthält,
- dieses Raster über jedes der Elementarnetze (RE 1, RE2) schickt.

2. Verfahren nach Anspruch 1, **dadurch gekennzeichnet, dass** man beim Empfang durch das Zielteilnehmergerät:
- die Nummer des empfangenen Rasters speichert,
- dieses Raster berücksichtigt, falls und nur falls seine Nummer nicht vorher bereits empfangen worden ist

3. Verfahren nach Anspruch 2, bei dem der Schritt der Berücksichtigung eines Rasters während eines vorbestimmten Zeitfensters erfolgt.

4. Verfahren nach Anspruch 2, bei dem eine Nummer der virtuellen Verbindung in dem Nummerierungsfeld berücksichtigt wird.

5. Verfahren nach einem der vorhergehenden Ansprüche zur Implementierung eines redundanten Kommunikationsnetzes vom Typ geschaltetes Full-Duplex-Ethernet im Avionik-Bereich.
